# EUROPEAN PATENT SPECIFICATION

(11) **EP 0 903 826 B1**
(45) Date of publication and mention of the grant of the patent: **24.04.2002**
(21) Application number: 98202429.1
(22) Date of filing: 20.07.1998
(51) Int. Cl.: H02B 13/025

(54) **Fire extinguishing device, especially for medium voltage switchboards**
Feuerlöschvorrichtung insbesondere für Mittelspannungsschalttafeln
Dispositif d'extinction de feu en particulier pour des tableaux électriques à moyenne tension

(30) Priority: 22.07.1997 IT MI971736
(43) Date of publication of application: 24.03.1999
(73) Proprietor: ABB RESEARCH LTD., 8050 Zürich (CH)
(72) Inventor: Nappini, Francesca, 20052 Monza (MI) (IT); Mascalzi, Gianni, 22100 Como (IT)
(74) Representative: Giavarini, Francesco

(56) References cited:
- EP-A- 0 418 755
- EP-A- 0 666 627
- EP-A- 0 817 223
- DE-A- 2 817 418
- DE-A- 3 424 363
- DE-A- 3 525 143
- DE-A- 3 541 514
- DE-A- 4 141 685
- DE-A- 19 520 698
- FR-A- 561 531
- US-A- 3 033 961
- US-A- 3 230 331
- US-A- 3 555 224

## Description

The present invention relates to a device for extinguishing the flame particularly in medium voltage electrical switchboards.

As is known, medium and high voltage electrical switchboards normally comprise devices that have the function of conveying the flames that might be emitted following the occurrence of an arc inside the medium and high voltage switchboards to the outside.

The solutions that are currently used normally involve creating a path for the flame that extends in an upward direction in the rear part of the switchboard and then comes back out forwards in a safety zone that is away from the zone immediately in front of the switchboard to avoid the possibility of striking the operators.

Therefore, the currently used solutions normally convey and draw away the flame, but do not substantially prevent the flame from exiting the electrical switchboards, so that there are still potential hazards for bystanders. EP-A-0666627 discloses a device comprising, in the path for releasing the fumes produced by the occurrence of an arc inside an electrical switchboard, a body that is permeable to the passage of the fumes and has a mass capable of absorbing heat to extinguish the flame by cooling. DE-A-2817418 discloses a device providing the cooling of fumes, generated by arc phenomena in a switchboard, and comprising a plurality of mass chambers, placed along the fume path, which are filled with stainless steel shavings. DE-A-3541514 discloses a device for cooling the fumes generated by arc phenomena in a low voltage circuit breaker, which comprises a mass formed by a pack of wire nets that substantially lay in parallel to a first and a second containing plate. EP-A-0817223 comprises a device for the de-ionization of gas produced by an electric arc in a low voltage circuit breaker, which comprises a wire net tissue for cooling said gas.

The aim of the present invention is to solve the problem explained above by providing a device for extinguishing the flame, particularly in medium voltage electrical switchboards, that makes it possible to prevent the propagation of the flame outside the zone occupied by the electrical switchboard, thus forming an assembly that undoubtedly respects the most rigorous standards in force.

Within the scope of the aforementioned aim, a particular object of the present invention is to provide a device in which the extinction of the flame is obtained in extremely short times, consequently preventing its propagation towards the outside.

Another object of the present invention is to provide a device that makes simple and fast installation possible even in existing electrical switchboards without requiring special or complex modifications to be performed.

Another object of the present invention is to provide a device that is able, as a result of its distinctive constructional characteristics, both to give greater guarantees of reliability and safety in use and, moreover, to be competitive from a purely economic standpoint.

The above-mentioned aim, as well as the said objects and others that will be more clear hereinafter, are achieved by a device for extinguishing the flame particularly in medium voltage electrical switchboards, characterised in that it comprises:
- a body, in the path for realising the fumes produced by the occurrence of an arc inside an electrical switchboard, which is permeable to the passage of the fumes and which is made of a mass with low thermal inertia, capable of absorbing heat to extinguish the flame by cooling, and which comprises a first perforated plate and a second perforated plate, which are distanced apart from one another, the distance between said first perforated plated and said second perforated plate being larger than 50 mm;
- a compartment for the passage of the fumes in communication with the inside of said electrical switchboard, said compartment featuring an exit hole towards the outside closed by said body that is permeable to the passage of the fumes.

Further advantages will be more clear from the description of a number of preferred but not exclusive embodiments of a device for extinguishing the flame particularly in medium voltage electrical switchboards illustrated purely by way of non-limitative example in the accompanying drawings, wherein:
Figure 1 is a diagrammatic representation of the device according to the invention applied to a medium voltage switchboard;
Figure 2 is a diagrammatic representation of the device showing the zone of connection to the electrical switchboard;
Figure 3 is a diagrammatic representation of a body permeable to the passage of the fumes made using a pack of wire nets;
Figure 4 is a diagrammatic representation of a body permeable to the passage of the fumes made using superimposed corrugated plates.

With reference to the said figures, the device for extinguishing the flame particularly in medium voltage electrical switchboards according to the invention comprises a compartment 1 that can be connected to the cabinet 2 of a medium voltage switchboard and is in communication with the inside of the switchboard by means of a through hole 3.

The compartment 1 is open towards the outside by means of a hole that is closed by a body, indicated by reference number 10, which is permeable to the passage of the fumes that might possibly be emitted inside the electrical switchboard and propagate towards the outside through the compartment 1.

The distinctive feature of the invention is constituted by the fact that the body 10 comprises a framework 11 that supports a first perforated plate 12 and a second perforated plate 13 that are spaced apart from one another for a distance greater than 50 mm and have a plurality of through holes 14 that are uniformly distributed.

A mass with very low thermal inertia is provided inside the zone delimited between the plates 12 and 13, which has the main function of instantly absorbing the heat of the fumes in transit, obtaining a sharp drop in temperature that causes the flame to be extinguished by cooling.

The distinctive feature of the invention is therefore to obtain flame extinction by exploiting a mass, preferably metal, that, by instantly absorbing the heat of the fumes, reduces the temperature and prevents the propagation of the flame.

In one embodiment of the invention, the low thermal inertia mass is made of stainless steel shavings packed in the zone between the plates 12 and 13.

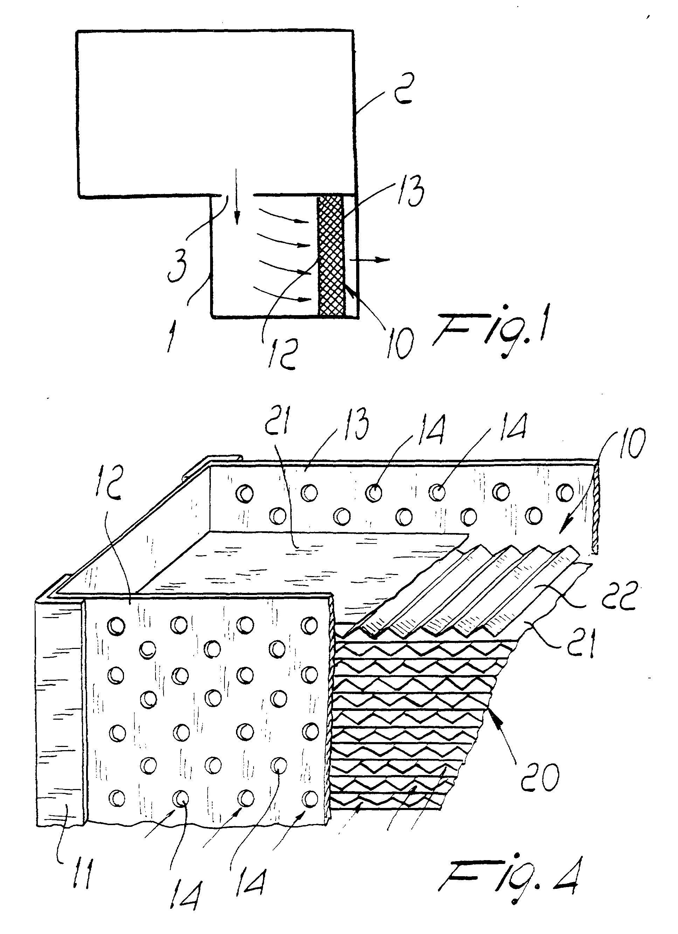

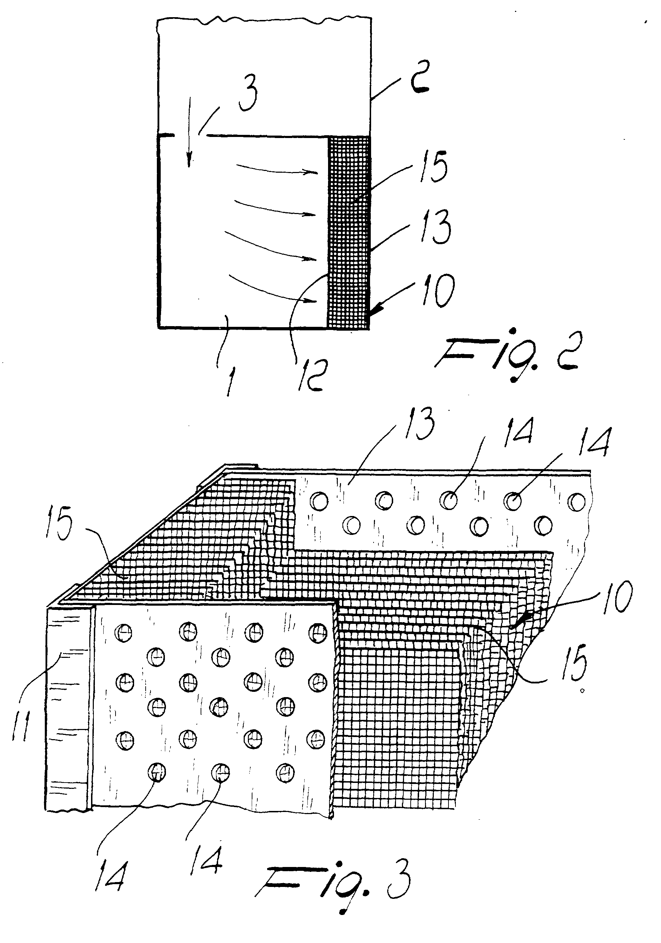

Alternatively, as illustrated in figure 3, the low thermal inertia mass is formed by a pack of wire nets 15 with a fine mesh that preferably has a pitch of an average of approximately 0.2 mm or less.

It has been found form experimental tests that a distance of greater than 50 mm between the plates at 12 and 13 is optimal in order to create a relatively high mass.

It is also possible to obtain the low thermal inertia mass using a pack of plates 20 that are superimposed in relation to one another, said pack of plates being formed of corrugated plates 22 alternated with flat plates 21, so that they create a plurality of very small channels in which the fumes in transit instantaneously transfer their heat to the metal mass of the plates that delimit the channels, thus obtaining the sharp drop in temperature that generates the extinction of the flame.

Metal materials such as stainless steel are preferably used, but it is conceptually possible to use other materials, which obviously have a low thermal inertia and are therefore able to instantly absorb the heat of the fumes.

From the above-given description it is thus evident how the invention achieves the intended aims and in particular it is pointed out that, according to the invention, the device for extinguishing the flame, particularly in medium voltage electrical switchboards, makes it possible to provide a guarantee against the propagation of the flame by exploiting a new constructional criteria that is extremely valid from a practical standpoint and easy to make.

## Claims

1. A device for extinguishing the flame particularly in medium voltage electrical switchboards, **characterised in that** it comprises:
- a body (10), in the path for realising the fumes produced by the occurrence of an arc inside an electrical switchboard (2), which is permeable to the passage of the fumes and which is made of a mass (15, 20) with low thermal inertia, capable of absorbing heat to extinguish the flame by cooling, and which comprises a first perforated plate (12) and a second perforated plate (13) distanced apart from one another, the distance between said first perforated plated (12) and said second perforated plate (13) being larger than 50 mm;
- a compartment (1) for the passage of the fumes in communication with the inside of said electrical switchboard (2), said compartment (1) featuring an exit hole towards the outside closed by said body (10) that is permeable to the passage of the fumes.

2. A device, according to claim 1, **characterised in that** said mass (15, 20) with low thermal inertia is made of stainless steel shavings.

3. A device, according to one or more of previous claims, **characterised by** the fact that said mass (15, 20) with low thermal inertia is formed by a pack of wire nets (15), which lay substantially parallel to said first perforated plate (12) and to said second perforated plate (13).

4. A device, according to one or more of previous claims, **characterised by** the fact that said wire nets (15) have meshes with an average pitch that is approximately 0.2 mm.

5. A device, according to one or more of previous claims, **characterised in that** said mass (15, 20) with low thermal inertia is formed by corrugated plates (22) alternating with a plurality of flat plates (21), creating a plurality of small channels running between said first perforated plate (12) and said second perforated plate (13).

## Patentansprüche

1. Vorrichtung zum Löschen der Flamme, insbesondere in Mittelspannungsschalttafeln, **dadurch gekennzeichnet, daß** sie folgendes enthält:
- einen Körper (10), und zwar in dem Weg zum Erfassen der Dämpfe, die durch das Auftreten eines Lichtbogens in einer elektrischen Schalttafel (2) erzeugt werden, der für den Durchgang der Dämpfe durchlässig ist und aus einer Masse (15, 20) mit niedriger Wärmeträgheit besteht, die geeignet ist, Wärme zu absorbieren, um die Flamme durch Abkühlen zu löschen, und der eine erste perforierte Platte (12) und eine zweite perforierte Platte (13) enthält, die in einem Abstand zueinander angeordnet sind, wobei der Abstand zwischen der ersten perforierten Platte (12) und der zweiten perforierten Platte (13) größer ist als 50 mm;
- eine Kammer (1) für den Durchgang der Dämpfe, die mit dem Inneren der elektrischen Schalttafel (1) in Verbindung steht, wobei die Kammer (1) eine Austrittsöffnung nach außen hat, die von dem Körper (10) verschlossen ist, der für den Durchgang der Dämpfe durchlässig ist.

2. Vorrichtung nach Anspruch 1, **dadurch gekennzeichnet, daß** die Masse (15, 20) niedriger Wärmeträgheit aus Spänen rostfreien Stahls hergestellt ist.

3. Vorrichtung nach einem oder mehreren der vorhergehenden Ansprüche, **dadurch gekennzeichnet, daß** die Masse (15, 20) niedriger Wärmeträgheit aus einem Paket von Drahtgeflechten (15) gebildet ist, die im wesentlichen parallel zu der ersten perforierten Platte (12) und zu der zweiten perforierten Platte (13) liegen.

4. Vorrichtung nach einem oder mehreren der vorhergehenden Ansprüche, **dadurch gekennzeichnet, daß** die Drahtgeflechte (15) Netze mit einem mittleren Abstand von ungefähr 0.2 mm haben.

5. Vorrichtung nach einem oder mehreren der vorhergehenden Ansprüche, **dadurch gekennzeichnet, daß** die Masse (15, 20) niedriger Wärmeträgheit aus gewellten Platten (22) im Wechsel mit mehreren flachen Platten (21) gebildet ist, die mehrere kleine Kanäle erzeugen, die zwischen der ersten perforierten Platte (12) und der zweiten perforierten Platte (13) verlaufen.

## Revendications

1. Dispositif pour éteindre les flammes, en particulier dans des tableaux électriques à moyenne tension, **caractérisé en ce qu'**il comprend :
- un corps (10), sur le trajet d'évacuation des fumées produites par la survenance d'un arc à l'intérieur d'un tableau électrique (2), qui est perméable au passage des fumées et est constitué par une masse (15, 20) à faible inertie thermique, apte à absorber de la chaleur pour éteindre les flammes par refroidissement, et qui comporte une première plaque perforée (12) et une seconde plaque perforée (13) à distance l'une de l'autre, la distance entre ladite première plaque perforée (12) et ladite seconde plaque perforée (13) étant supérieure à 50 mm ;
- un compartiment (1) pour le passage des fumées, communiquant avec l'intérieur dudit tableau électrique (2), ledit compartiment (1) comportant un trou de sortie vers l'extérieur, fermé par ledit corps (10), perméable au passage des fumées.

2. Dispositif selon la revendication 1, **caractérisé en ce que** ladite masse (15, 20) à faible inertie thermique est constituée de copeaux d'acier inoxydable.

3. Dispositif selon ou plusieurs des revendications précédentes, **caractérisé en ce que** ladite masse (15, 20) à faible inertie thermique est formée par un paquet de grillages métalliques (15) sensiblement parallèles à ladite première plaque perforée (12) et la ladite seconde plaque perforée (13).

4. Dispositif selon une ou plusieurs des revendications précédentes, **caractérisé en ce que** lesdits grillages métalliques (15) ont des mailles à écartement moyen d'environ 0,2 mm.

5. Dispositif selon une ou plusieurs des revendications précédentes, **caractérisé en ce que** ladite masse (15, 20) à faible inertie thermique est en tôles ondulées (22) alternant avec une pluralité de tôles planes (21), créant une pluralité de petits canaux s'étendant entre ladite première plaque perforée (12) et ladite seconde plaque perforée (13).
